# FASCICULE DE BREVET EUROPEEN

(11) **EP 3 498 585 B1**
(45) Date de publication et mention de la délivrance du brevet: **15.04.2020**
(21) Numéro de dépôt: 18208864.1
(22) Date de dépôt: 28.11.2018
(51) Int. Cl.: B63B 27/34, B63J 4/00, F16L 37/00

(54) **DISPOSITIF ET PROCÉDÉ DE TRANSFERT DE FLUIDE ET DE CONNEXION**
VERBINDUNGSVORRICHTUNG FÜR FLÜSSIGKEITSÜBERTRAGUNG UND VERFAHREN ZUR ÜBERTRAGUNG VON FLÜSSIGKEITEN MIT EINER SOLCHEN VERBINDUNGSVORRICHTUNG
CONNECTION DEVICE FOR FLUID TRANSFER AND METHOD FOR TRANSFERRING FLUID USING SUCH A CONNEXION DEVICE

(30) Priorité: 12.12.2017 FR 1761995
(43) Date de publication de la demande: 19.06.2019
(73) Titulaire: Sofresid Engineering, 78180 Montigny-le-Bretonneux (FR)
(72) Inventeur: LARNO, Charles-Xavier, 29000 QUIMPER (FR)
(74) Mandataire: Cabinet Beau de Loménie

(56) Documents cités:
- WO-A1-2008/093812
- WO-A1-2014/043636
- FR-A- 1 466 542
- GB-A- 2 537 673

## Description

### Domaine de l'invention

La présente invention concerne le domaine du transfert de fluide entre un orifice d'une paroi métallique d'un réservoir ou réseau hydraulique, notamment à bord d'un navire, et un autre orifice d'un autre réservoir ou autre réseau notamment d'une unité de traitement du fluide notamment à bord d'un autre navire ou support flottant.

Plus particulièrement, la présente invention concerne le transfert et le traitement des eaux de ballast. Un ballast est un réservoir d'eau de grande contenance équipant certains navires. Il est destiné à être rempli ou vidangé d'eau de mer afin d'optimiser la navigation. L'opération de vidange, ou déballastage, effectuée dans de mauvaises conditions peut poser des problèmes écologiques.

Du fait du trafic maritime international, d'importants volumes d'eau de mer transitent par ce biais d'un continent à l'autre. On estime à 10 milliards de mètres cube chaque année, dont 22 millions déchargés le long des seules côtes françaises métropolitaines. Ces eaux de ballast sont chargées de virus, microorganismes, phyto- et zoo-plancton, petits mollusques et crustacés dont certains survivent au voyage et parviennent à conquérir leur territoire d'arrivée, bouleversant ainsi l'écosystème local. Des centaines d'invasions d'espèces exotiques ont été recensées, avec parfois des conséquences désastreuses. A l'échelle mondiale, 60 % des cas d'introduction d'espèces invasives sont liées au trafic maritime et principalement aux eaux et sédiments de ballast. Selon l'Organisation maritime internationale (OMI), les eaux de ballast sont responsables chaque jour du transfert de 7 000 à 10 000 espèces dans le monde.

Depuis l'entrée en vigueur de la Convention internationale sur les eaux de ballast, tous les navires sillonnant la planète doivent s'équiper pour traiter leurs eaux de ballasts avant de les rejeter. Les navires sont tenus de gérer leurs eaux de ballast pour éliminer ou rendre inoffensifs les organismes aquatiques nuisibles et les agents pathogènes présents dans les eaux de ballast et sédiments, ou pour empêcher qu'ils soient admis dans ces eaux ou rejetés avec elles.

Porte-conteneurs, tankers, cargos, vraquiers, navires de croisière, gros bateaux de pêche... plus de 50 000 navires sont concernés par cette Convention et devront s'équiper de moyens permettant de traiter leurs eaux de ballast. Plusieurs procédés ont été homologués par l'OMI et sont commercialisés depuis quelques années. Les techniques utilisées vont du traitement des eaux par rayonnement ultraviolet, électrolyse ou filtration jusqu'à l'introduction de produits chimiques ou biocides. Étant donné le volume d'eau à traiter par les navires - des dizaines de milliers de m3 par bateau - l'installation de tels dispositifs est onéreuse et complexe, surtout pour des bateaux anciens dont l'architecture n'est pas adaptée. La nouvelle réglementation impose de respecter un taux de rejet des eaux de ballast soit par renouvellement de ses volumes, soit par système de traitement, soit par rejet dans une installation portuaire. Les réseaux fluides d'un navire ont pour la plupart des systèmes de fixations mécaniques (brides, fixations par cames, mâchoires hydrauliques...) pour une connexion avec un réseau extérieur. Mais, les navires sont dépourvus d'une fixation mécanique intégrée au niveau de l'orifice de la coque pour récupérer ses eaux de ballast non traitées. En effet, le rejet à la mer des eaux de ballast se fait à travers d'un orifice simplement découpé dans la coque en guise de terminaison de ce réseau.

La présente invention concerne plus généralement un dispositif de transfert de fluide équipé d'un dispositif de connexion d'une conduite de transfert de fluide sur un orifice d'une paroi plane de navire ou de réservoir afin de permettre le transfert de fluide depuis un dit orifice non équipé de système de fixation mécanique de conduite de transfert de fluide. Ce dispositif est destiné plus particulièrement à être embarqué sur un support flottant ou une barge de traitement des eaux de ballast en assistance mobile à des navires en escale sans nécessiter que les dits navires intègrent une connexion standardisée.

### Arrière-plan de l'invention

On connaît dans WO200893812 un dispositif pour livrer des eaux de ballasts traitées à un navire via un orifice de prise d'eau de mer (« sea-chest »), située sous la ligne de flottaison. Ce dispositif ne spécifie pas le mode de connexion de la conduite de transfert sur le dit orifice et à plus forte raison si le dit orifice est situé en surface.

Dans WO200893811, on décrit un dispositif d'assistance aux navires pour traiter leurs eaux de ballast. Mais là encore il est considéré que le navire assisté dispose au niveau de l'orifice concerné de connexion mécanique standardisée dédiée.

Dans WO2017152617, on décrit également un dispositif sur un navire de servitude stockant des volumes d'eaux traitées. Mais, encore une fois, aucune information liée au système de connexion de la conduite de transfert à l'orifice concerné de la coque n'est fournie.

On connaît dans CN102660980 et WO201620670 des dispositifs traitant de conduites flexibles équipées à une extrémité d'un dispositif de connexion électromagnétique, mais ces systèmes sont à aimants permanents (systèmes fixes) et nécessitent un encastrement de pièces pour le positionnement avec une force magnétique en guise de maintien.

### Objet et résumé de l'invention

La présente invention a donc pour but principal de proposer un procédé et dispositif universel, simple et fiable pour réaliser la connexion d'une conduite flexible de transfert de fluide à partir d'un orifice d'une paroi métallique plane de réservoir adaptable à tous les orifices sans nécessiter de système de connexion mécanique ou autre intégré audit orifice, notamment sur un navire sans nécessiter que le navire n'ait de modification à apporter au niveau du dit orifice.

Un but de la présente invention est de fournir ainsi une assistance portuaire pour le traitement des eaux de ballast ne nécessitant pas de faire des modifications de systèmes de connexion de tuyauterie et/ou d'installer un système de traitement embarqué sur les navires assistés.

Conformément à l'invention, ce but est atteint grâce à un dispositif de transfert de fluide et de connexion comprenant :
a) une conduite de transfert de fluide flexible, et
b) au moins une pièce de connexion électromagnétique, de préférence de forme torique, définissant un orifice axial dénommé « orifice de connexion », fixée respectivement à au moins une des extrémités longitudinales de la dite conduite de transfert, la dite pièce de connexion étant apte à s'appliquer de manière étanche contre une paroi métallique plane autour d'un orifice de la dite paroi métallique dénommé « orifice de transfert » pour permettre le transfert d'un fluide à travers ledit orifice de connexion, le dit orifice de transfert et la dite conduite de transfert, la dite pièce de connexion renfermant une bobine d'excitation électromagnétique formant un électroaimant apte à plaquer une face avant plate, de préférence annulaire, de la dite pièce de connexion contre ladite paroi métallique lorsque la dite bobine est alimentée en courant électrique par un câble d'alimentation, la dite pièce de connexion comprenant au moins un premier support de levage comprenant deux premier et deuxième éléments d'accroché apte à coopérer avec des moyens de levage et manutention pour permettre le levage et le déplacement de la dite pièce de connexion, au moins un deuxième support de levage étant apte à coopérer avec la dite conduite de transfert et les dits moyens de levage et manutention pour permettre le levage et le déplacement de la conduite de transfert par les mêmes dits moyens de levage et manutention, le dit deuxième support de levage présentant une forme de collier ou manchon tubulaire apte à être positionné de manière fixe et amovible autour et le long de la dite conduite de transfert à une distance déterminée de ladite pièce de connexion, au moins 3 élingues de levage en patte d'oie suspendues à un même crochet de levage, les dites élingues de levage étant fixées respectivement à trois éléments d'accroché, dont deux dits premier et deuxième éléments d'accroché solidaires de la dite pièce de connexion disposés symétriquement sur la face supérieure de la dite pièce de connexion et un troisième élément d'accroché solidaire dudit collier ou manchon tubulaire disposé sur la face supérieure dudit collier ou manchon tubulaire.

Le dispositif de transfert et connexion selon l'invention permet ainsi de coller à volonté et de manière réversible par ce système d'électroaimant un réseau extérieur sur une paroi plane indépendamment d'une opération mécanique de connexion effectuée par l'homme.

Ce système à 3 élingues en patte d'oie suspendues à un point unique de liaison avec les moyens de levage contribue à faciliter le positionnement relatif de la pièce de connexion et de la conduite de transfert de façon à ce que la partie terminale de la conduite soit disposée coaxialement à la pièce de connexion et/ou pour réaliser la distribution homogène des efforts sur le pièce de connexion, éviter une courbure de la conduite à proximité de la pièce de connexion, et surtout permettre un ajustement de l'inclinaison de la dite face avant plate de la pièce de connexion par rapport au plan de la dite paroi métallique lors de son application contre la dite paroi.

Plus particulièrement, ce système de suspension du collier ou manchon de levage et de la pièce de connexion par 3 élingues permet de contrôler le positionnement relatif de la conduite et de la pièce de connexion en vue de :
- reprendre le poids de la conduite sur la bride qui la lie à la pièce de connexion, soumise à du cisaillement à défaut de quoi les vibrations ou les mouvements d'une manière générale causés par le flux de liquide transféré, pourraient engendrer ainsi une perte d'étanchéité; et
- éviter une courbure de la conduite flexible trop proche de la bride de fixation alors que la structure de conduite est plus fragile à ses extrémités, et
- adapter une tension appropriée sur les 3 élingues pour ajuster l'orientation de la face avant de la pièce de connexion électromagnétique afin de présenter cette dernière parallèlement à la paroi de la coque du navire qui ne sera pas nécessairement perpendiculaire au plan d'eau.

On comprend que :
- l'axe XX' auquel il est fait ici référence peut correspondre à un axe commun de la dite conduite de transfert, dudit orifice de connexion et dudit orifice de transfert lorsque la conduite de transfert est disposée rectilignement et perpendiculairement au plan de ladite face avant de la pièce de connexion, le dit orifice de connexion étant appliqué contre et en vis-à-vis dudit orifice de transfert, et
- la dite face avant plate, de préférence annulaire, de la pièce de connexion est traversée par le dit orifice de connexion axial.

La face avant de la pièce de connexion présente de préférence une circonférence de forme circulaire coaxiale à l'orifice de connexion circulaire.

Un électro-aimant est constitué d'une bobine laquelle produit un champ magnétique lorsqu'elle est alimentée par un courant électrique : l'énergie électrique étant convertie en énergie magnétique. Une pièce polaire en matériau ferromagnétique doux appelée cœur magnétique canalise les lignes de champs magnétiques et permet d'augmenter l'induction magnétique générée par la bobine.

Le deuxième support de levage permet comme explicité ci-après de :
- éviter une courbure excessive de la conduite de transfert, et
- homogénéiser la distribution des efforts transmis entre l'extrémité de la conduite de transfert et la pièce de connexion, et
- faciliter le positionnement de la pièce de connexion lors de l'approche et l'application de la pièce de connexion contre la paroi du dit orifice de transfert.

Selon d'autres caractéristiques avantageuses :
- ledit collier ou manchon tubulaire est apte à être positionné de manière fixe et amovible autour et le long de la dite conduite de transfert à une distance déterminée (d) de ladite pièce de connexion adaptable à volonté ;
- ledit collier ou manchon tubulaire est apte à coulisser par l'intermédiaire de roulements à billes, roulettes et/ou patins.
- ledit collier ou manchon tubulaire est apte à être positionné à une distance déterminée (d) de ladite pièce de connexion, permettant de maintenir la conduite de transfert en position coaxiale au dit orifice de connexion au moins dans la partie de conduite entre le dit deuxième support de levage et la pièce de connexion à l'aide d'une grue à bras articulé;
- ledit deuxième support de levage comprend un système de collier articulé comprenant deux demi-coquilles de part et d'autre de la conduite flexible fixées entre elles permettant de solidariser le deuxième support de levage à la conduite de manière variable et amovible.

On comprend que lorsque ledit collier ou manchon est apte à coulisser, ledit collier ou manchon est apte à être positionné à une distance déterminée mais variable par rapport à ladite pièce de connexion.

De préférence encore, le dit deuxième support de levage présente une forme de collier ou manchon tubulaire apte à être positionné de manière fixe et amovible autour et le long de la dite conduite de transfert à une distance déterminée de ladite pièce de connexion, par un système de colliers articulés. Le positionnement du dit support de levage le long de la conduite de transfert est adapté en fonction de la longueur de la conduite et du poids respectif de celle-ci et de la pièce de connexion de façon à ce que ses fonctions techniques ci-dessus mentionnées soient optimisées. Alternativement, on peut mettre en œuvre un système avec manchon ou collier de levage coulissant par l'intermédiaire de roulements à billes, roulettes et/ou patins.

Plus particulièrement, un dit collier de levage est apte à être articulé pour être démonté.

Plus particulièrement, le dispositif de transfert de fluide et de connexion selon l'invention comprend au moins 3 élingues de levage reliées à un même crochet de levage, les dites élingues de levage étant fixées respectivement à trois éléments d'accroché, dont deux éléments d'accroché solidaires de la dite pièce de connexion disposés symétriquement sur la face supérieure de la dite pièce de connexion et un troisième élément d'accroché solidaire dudit collier ou manchon tubulaire disposé sur la face supérieure dudit collier ou manchon tubulaire. Ce système à 3 élingues en patte d'oie suspendues à un point unique de liaison avec les moyens de levage contribue à faciliter le positionnement relatif de la pièce de connexion et de la conduite de transfert de façon à ce que la partie terminale de la conduite soit disposée coaxialement à la pièce de connexion et/ou pour réaliser la distribution homogène des efforts sur le pièce de connexion, éviter une courbure de la conduite à proximité de la pièce de connexion, et surtout permettre un ajustement de l'inclinaison de la dite face avant plate de la pièce de connexion par rapport au plan de la dite paroi métallique lors de son application contre la dite paroi.

Plus particulièrement, la dite pièce de connexion comprend une pièce torique massive en matériau amagnétique à section axiale rectangulaire renfermant une cavité torique au sein de laquelle la dite bobine est enroulée en spires coaxiales sur plusieurs couches superposées longitudinalement et radialement, la dite bobine étant noyée dans une résine époxy diélectrique à haute conductivité thermique apte à éviter une surchauffe du bobinage.

Plus particulièrement encore, la dite pièce de connexion est fixée indirectement à l'extrémité de la dite conduite de transfert par l'intermédiaire d'une première bride de fixation mécanique, la dite première bride de fixation mécanique étant fixée directement et de manière réversible à la dite extrémité de la dite conduite de transfert. Ainsi il est possible de changer la conduite de transfert flexible qui a une durée de vie plus courte que la pièce de connexion et que le premier support de levage qui peuvent être ainsi conservés et adaptés sur une autre conduite de transfert le cas échéant plus longue.

Plus particulièrement encore, la dite pièce de connexion comprend sur une face arrière une échancrure à fond annulaire plat axial dans la dite pièce massive en matériau ferromagnétique comprenant des perçages taraudés fixés par des vis à la dite première bride de connexion mécanique.

Plus particulièrement encore, la dite pièce de connexion électromagnétique comprend sur sa face avant au moins un joint torique souple et compressible disposé coaxialement autour dudit orifice de connexion de la pièce de connexion. Cette souplesse et compressibilité du joint permettent de ne pas augmenter la distance séparant la dite paroi métallique par rapport à la dite bobine pour ne pas limiter la force électromagnétique.

Plus particulièrement encore, la dite conduite de transfert comprend à son autre extrémité une deuxième bride de connexion mécanique. On comprend que cette deuxième bride de fixation mécanique pourra coopérer avec un orifice d'un deuxième réservoir ou réseau notamment d'une unité de traitement de fluide.

Plus particulièrement encore, le dispositif de transfert de fluide et de connexion selon l'invention comprend des moyens de levage comprenant une grue en forme de bras articulé.

Plus particulièrement encore, le bras articulé permet de déplacer un crochet de levage qui y est suspendu par un câble de levage et auquel crochet de levage sont suspendus plusieurs élingues de levage reliées respectivement à la dite conduite de transfert et à la dite pièce de connexion.

La dite grue peut être embarquée sur le navire comprenant la dite paroi métallique comprenant le dit orifice de transfert ou sur un support flottant ou barge d'assistance, la dite conduite de transfert assurant la liaison entre le dit support flottant et un navire assisté comprenant le dit orifice de transfert.

La présente invention fournit également, une barge d'assistance pour le transfert de fluide depuis un dit orifice de transfert d'une dite paroi métallique du bordé d'un navire assisté comprenant un dispositif de transfert de fluide et de connexion selon l'invention, et des moyens de levage comprenant une grue en forme de bras articulé montée sur le pont de la dite barge d'assistance, ledit bras articulé supportant le dit dispositif de transfert de fluide et de connexion.

Plus particulièrement, la dite conduite de transfert comprend à son autre extrémité une deuxième bride de connexion mécanique fixée à une unité de traitement de fluide, de préférence une unité de traitement d'eaux de ballast disposée à bord de la dite barge d'assistance.

La présente invention concerne également un procédé de transfert à l'aide d'un dispositif de transfert et connexion comprenant une pièce de connexion électromagnétique reliée à une conduite de transfert flexible, afin de transférer un volume de liquide entre un orifice de transfert, notamment un orifice d'un réseau fixe d'un navire caractérisé par un dit orifice de transfert à travers la coque en guise de terminaison de ce réseau, ainsi qu'un réseau extérieur en amont ou en aval de l'orifice de transfert.

Plus précisément, la présente invention fournit un procédé de transfert de fluide à l'aide d'un dispositif de transfert de fluide et de connexion selon l'invention ou une barge d'assistance selon l'invention, dans lequel on réalise les étapes suivantes :
a) on déplace à l'aide de moyens de levage et manutention la dite pièce de connexion électromagnétique et la dite conduite de transfert de manière à appliquer la dite face avant de la dite pièce de connexion électromagnétique contre une paroi métallique plane autour dudit orifice de connexion de la dite paroi métallique, et
b) on alimente en courant électrique la dite bobine électromagnétique pour plaquer de manière étanche la dite pièce de connexion contre une paroi métallique plane autour dudit orifice de transfert de la dite paroi métallique, et
c) on effectue le transfert d'un fluide à travers le dit orifice de transfert, ledit orifice de connexion et la dite conduite de transfert, puis
d) une fois, le transfert de fluide terminé, on interrompt l'alimentation en courant électrique de la dite bobine et on dégage, à l'aide des dits moyens de levage et manutention, la dite pièce de connexion électromagnétique et la dite conduite de transfert par rapport à la dite paroi métallique plane.

Plus particulièrement, on réalise le transfert d'eaux de ballast depuis un orifice de transfert d'une paroi métallique du bordé d'un navire assisté vers une barge d'assistance comprenant des dits moyens de levage comprenant une grue en forme de bras articulé montée sur le pont de la dite barge d'assistance, le dit bras articulé supportant le dit dispositif de transfert de fluide et de connexion, et avant, après ou de préférence pendant le transfert des eaux de ballasts, on réalise le traitement des eaux de ballast à l'aide d'une unité de traitement d'eaux de ballast à bord de la dite barge d'assistance, la dite conduite de transfert comprenant à son autre extrémité une deuxième bride de connexion mécanique fixée à un orifice d'entrée de ladite unité de traitement d'eaux de ballast à bord de la dite barge d'assistance.

Le traitement des eaux de ballast peut se faire en direct, soit dans le sens barge d'assistance vers le navire assisté si la barge livre le navire en eau de ballast traité, soit dans le sens navire assisté vers la barge si celle-ci est en réception des eaux de ballasts à traiter. En pratique, il n'y a pas de stockage de l'eau de ballast à traiter.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

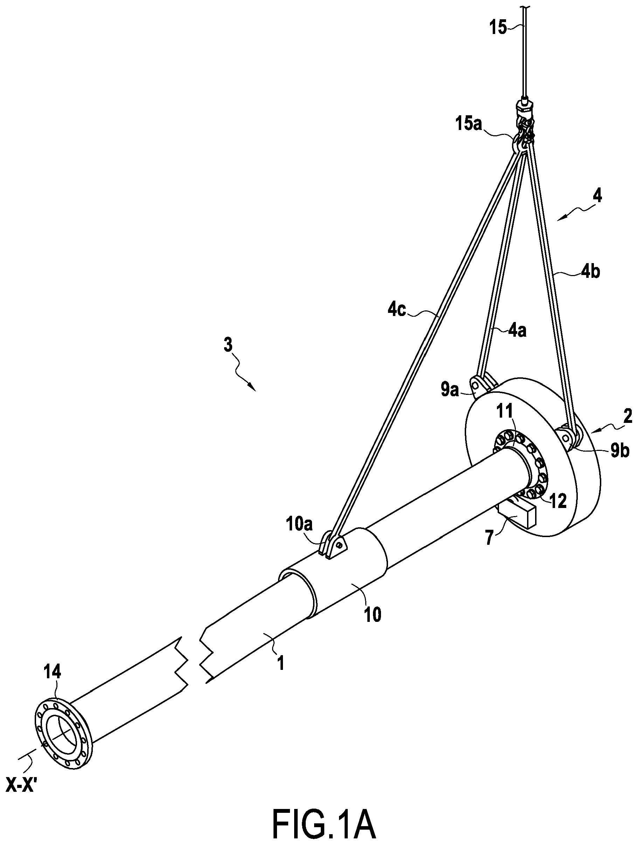

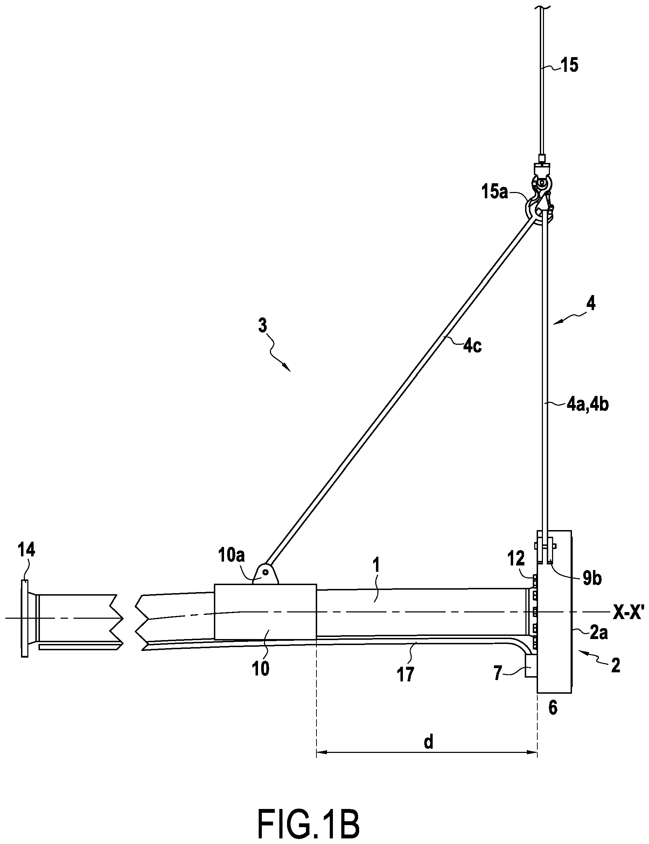

- les figures 1A et 1B représentent des vues du dispositif de transfert et connexion 3 selon la présente invention en perspective (figure 1A) et de côté (figure 1B) ; et

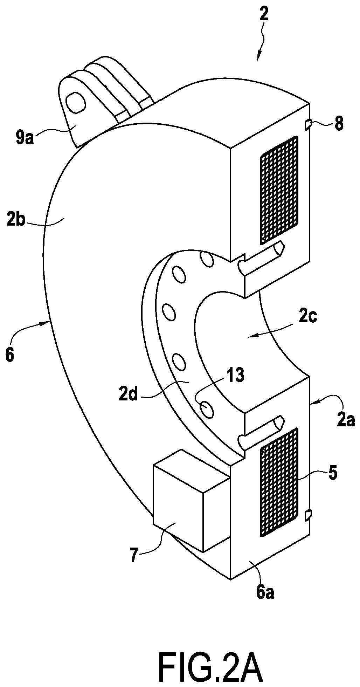

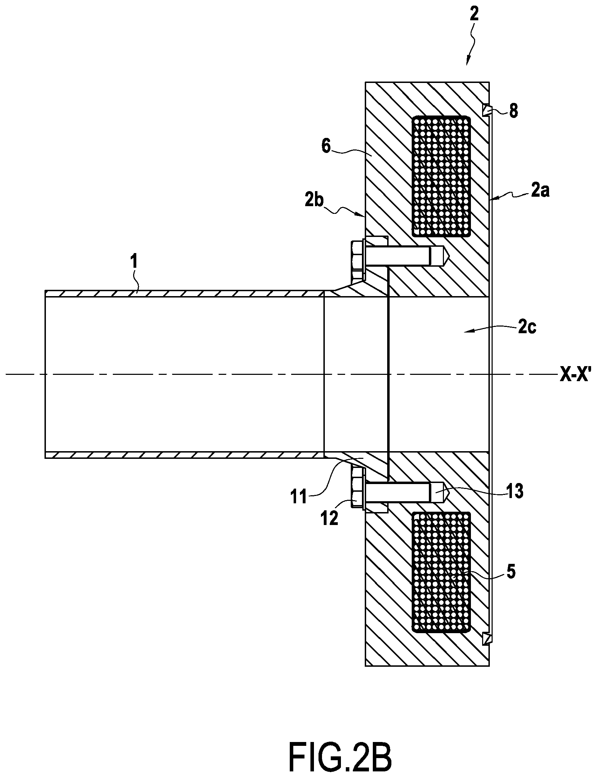

- les figures 2A et 2B représentent des vues du dispositif de connexion électromagnétique 2 selon la présente invention selon une coupe axiale en perspective (figure 2A) et coupe axiale en vue de côté (figure 2B) ; et
- les figures 3A à 3C représentent des vues d'une liaison entre une barge d'assistance 20 et un navire 23 assisté à l'aide d'un dispositif de transfert et connexion 3 selon la présente invention.

### Description détaillée de l'invention

Le dispositif de transfert et connexion 3 selon l'invention comporte une conduite flexible de transfert de fluide 1 dont une extrémité longitudinale comprend une bride de fixation 11 fixée mécaniquement par des vis 12 à une pièce de connexion électromagnétique 2 en forme de couronne. La pièce de connexion électromagnétique 2 comprend un orifice de connexion traversant 2c à section circulaire traversant axialement la pièce selon un axe XX', l'orifice 2c étant de même diamètre que le diamètre d'une bride de fixation mécanique 11 et que de la conduite de transfert 1 comme décrit ci-après.

Le dispositif de transfert et connexion 3 selon l'invention comprend un support de levage 10 de forme de collier ou manchon tubulaire rigide traversé par la dite conduite de transfert 1. Ce support de levage 10 est disposé de manière fixe mais adaptable à volonté le long de la conduite à distance d de la bride de fixation 11 qui assure la fixation à la pièce de connexion électromagnétique 2 à la conduite de transfert 1. Cette distance d, de préférence sensiblement à pas plus de 1m de la bride 11, permet de maintenir la conduite de transfert en position coaxiale au dit orifice de connexion 2c au moins dans la partie de conduite 1 entre le support de levage 10 et la pièce de connexion 2 à l'aide d'une grue à bras articulé 16. Ce support de levage 10 permet d'éviter une courbure excessive de la conduite de transfert et homogénéiser la distribution des efforts sur la bride de fixation 11 et la pièce de connexion 2 comme explicité ci-après. Un système de collier (non représenté) comprenant deux demi-coquilles de part et d'autre de la conduite flexible fixées entre elles par un jeu de vis et boulons permet de solidariser le support de levage à la conduite de manière variable et amovible.

La pièce de connexion 2 comprend un électroaimant du type commercialisé par la société Lenoir Magnetic System (France) dénommé « électro-aimant circulaire à carcasse assemblée » constitué d'une carcasse 6 mécanosoudée en acier amagnétique ou à haute perméabilité magnétique laquelle carcasse 6 comprend une cavité torique à section rectangulaire 6a renfermant une bobine d'excitation électromagnétique 5. La carcasse 6 permet ainsi de protéger la bobine 5 de l'électroaimant en cas de choc violent éventuel lors du positionnement du dispositif. La carcasse 6 définit une face avant 2a de forme annulaire plate fermant la cavité 6a de la pièce de connexion.

La carcasse 6 comprend sur sa face arrière 2 un évidemment formant une partie annulaire plate en retrait 2d comprenant des perçages taraudés 13. Cette partie en retrait 2d est apte à recevoir la bride de fixation 11 à l'extrémité de la conduite de transfert 1. Cette bride de fixation 11 comprend des percements aptes à recevoir des vis 12 coopérant avec les perçages taraudés 13 permettant ainsi de fixer la bride de fixation 11 et donc la conduite de transfert 1 avec la pièce de connexion 2.

Le support de levage 10 et la pièce de connexion 2 sont suspendus à un même crochet 15a par 3 élingues 4a, 4b et 4c. Le support de levage est suspendu à une élingue 4c à partir d'un étrier de levage 10a sur la face supérieure du dit collier ou manchon. La pièce de connexion 2 est suspendue à deux élingues 4a et 4b au niveau de deux points d'accroché en forme d'étriers de levage disposés symétriquement sur la face supérieure de la couronne ou carcasse 6.

Ce système de suspension du collier ou manchon de levage 10 et de la pièce de connexion 2 par 3 élingues permet de contrôler le positionnement relatif de la conduite 1 et de la pièce de connexion 2 en vue de :
- réaliser une bonne répartition homogène du poids de la conduite sur la bride de fixation 11 et le jeu de vis 12 qui les lient à la pièce de connexion 2. A défaut, les vis et boulons supérieurs pourraient être soumis à du cisaillement. De plus, les vibrations ou les mouvements d'une manière générale causés par le flux de liquide transféré, pourraient augmenter le jeu de la boulonnerie si cette dernière était mal serrée, et engendrer ainsi une perte d'étanchéité; et
- éviter une courbure de la conduite flexible trop proche de la bride 11 alors que la structure de conduite est plus fragile à ses extrémités, et
- adapter une tension appropriée sur les 3 élingues pour ajuster l'orientation de la face avant 2a de la pièce de connexion électromagnétique afin de présenter cette dernière parallèle à la paroi de la coque du navire qui ne sera pas forcément perpendiculaire au plan d'eau.

La bobine 5 est réalisée en fil guipé disposé en spires adjacentes coaxiales dans la direction axiale XX' et en couches superposées radialement. La bobine 5 est noyée dans une résine époxy diélectrique à haute conductivité thermique évitant ainsi une surchauffe du bobinage. La structure de la carcasse 6 est en acier amagnétique au manganèse (12 à 14 %), servant de simple enceinte de protection avec des qualités n'affectant pas les forces magnétiques.

Une commande à distance permet d'alimenter la bobine 5 en courant électrique via un câble 17 relié à un boitier de connexion ou boite à bornes 7 remplie de résine isolante et qui permet le raccordement du câble 14 à la bobine 5 à l'aide de bornes. La bobine est ainsi apte à créer ainsi un champ électromagnétique afin de plaquer la face avant 2a de la carcasse 6 de la pièce de connexion 2 contre la paroi ferrique de la coque du navire lorsqu'elle est alimentée en courant électrique. Le champ électromagnétique permet de plaquer la face avant 2a de la carcasse 6 de la pièce de connexion 2 contre l'orifice de transfert avec une force de maintien de quelques kN selon le diamètre de la conduite, de 6" à 12" par exemple 13 kN pour une conduite de transfert de diamètre de 8". Cette force reprend le poids de l'ensemble du dispositif 3 avec la conduite flexible 1 remplie d'eau de mer ainsi que la force répulsive d'une partie du flux de fluide qui se réfléchit contre la paroi métallique 21 de la coque du navire 23 si l'orifice de transfert 22 de ce dernier présente un diamètre inférieur à celui de la conduite de transfert.

En raison d'aspérités au niveau de la surface de la coque contre laquelle la pièce de connexion 2 doit être plaquée, un joint d'étanchéité 8 est placé sur la face avant 2a de la pièce de connexion 2 coaxialement à l'orifice de connexion et l'orifice de transfert, afin d'assurer une étanchéité efficace lors du transfert de fluide. Le joint 8 est incrusté dans une rainure circulaire de la face avant 2a de la pièce de connexion 2 et présente une souplesse et une compressibilité suffisante pour ne pas limiter la force électromagnétique. En effet, la force électromagnétique étant inversement proportionnelle à la distance séparant la paroi ferrique 22 de la coque par rapport à l'électro-aimant 5, si un joint 8 trop épais et/ou non compressible était utilisé, cela limiterait d'autant la force électromagnétique en rapport avec l'épaisseur du joint.

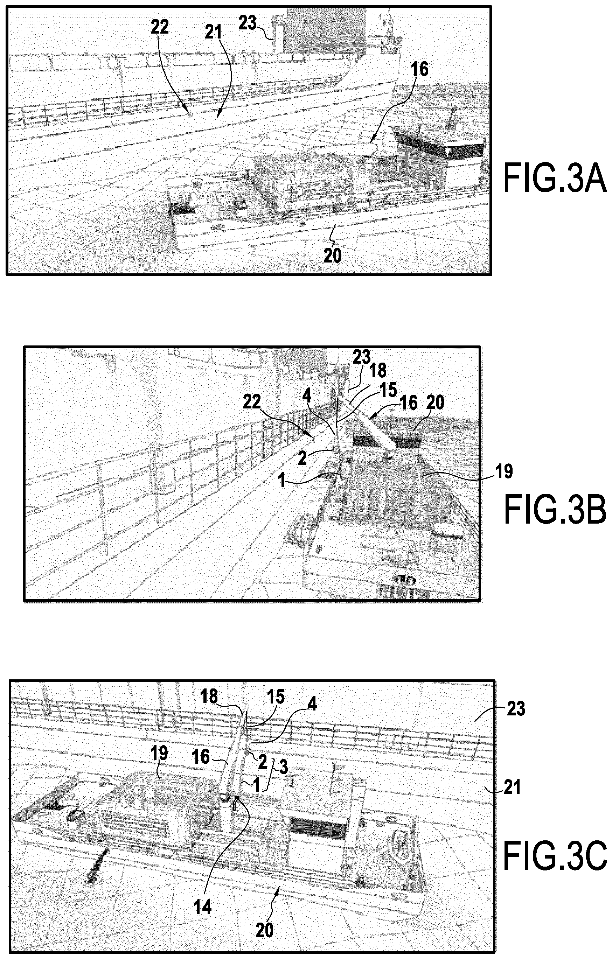

Sur les figures 3A à 3C, on montre le transfert d'eaux de ballast entre une barge d'assistance 20 équipée d'une grue de levage 16 sur son pont, la dite grue 16 supportant le dispositif de transfert et connexion 3 selon l'invention via un câble de levage 15 auquel il est suspendu en vue du transfert d'eaux de ballast entre la barge 20 et un navire assisté 23 au niveau d'un orifice de transfert 21 sur une paroi en fer 22 de sa coque au-dessus de la surface de flottaison.

La mise en œuvre d'une grue à bras articulé permet de lever le dispositif de transfert et connexion 3 incluant l'ensemble conduite 1 et la pièce de connexion électromagnétique 2 pour le positionner en vis à vis de l'orifice de transfert 21 dans la coque du navire assisté lequel orifice de transfert peut se trouver à plusieurs mètres, voire dizaines de mètres au-dessus de la barge.

Alternativement, on pourrait envisager, de mettre en œuvre une grue sur le navire assisté 23 ou une procédure de levage par guindeau du navire assisté, ou sur la barge, avec système de renvoi au niveau du pont principal du navire assisté.

La longueur totale de la conduite de transfert depuis son branchement côté barge jusqu'au branchement côté navire assisté peut atteindre en général entre 5 et 40 m. Il est avantageux de réaliser la conduite de transfert par assemblage de tronçons de longueur de 5 à 10 m ce qui permet une meilleure manipulation lorsqu'on doit ériger la conduite et permet de changer le cas échéant uniquement un petit tronçon plutôt que la conduite en entier en cas d'usure localisée. L'avantage d'une longueur non tronçonnable de 40 mètres est d'éviter la manutention de différents tronçons mais cela nécessite un tambour de stockage pour ranger la conduite flexible 1, une fois l'opération terminée, ce type d'équipement étant relativement onéreux. Si la différence de franc-bord n'est pas trop grande, une conduite de longueur adaptable par tronçons génèrera moins de pertes de charges.

Le diamètre de la conduite de transfert 1 pourra varier par exemple entre 6", 8" et 10" (soit environ 150mm, 200mm et 250mm) suivant le débit du fluide à transférer et le diamètre de l'orifice de transfert du navire. Le diamètre de la bride 11 sera ainsi en conséquence suivant les normes en vigueur soit respectivement 279mm, 300mm et 362mm.

Concernant la pièce de connexion électromagnétique 2, pour un modèle de conduite de transfert de diamètre de 8" (200mm), le diamètre extérieur de la pièce de connexion 2 sera d'environ de 950mm. Pour les conduites de transfert de diamètres de 6 et 10", les diamètres extérieurs de la pièce de connexion 2 sera d'environ 750 et respectivement 1200mm.

Les moyens de traitement des eaux de ballasts 19 embarqués sur la barge d'assistance peuvent être de plusieurs types. Le procédé choisi sera avantageusement une combinaison d'une filtration et d'un traitement UV. Ce type de traitement présente l'avantage de:
- pouvoir être effectué en direct sans nécessiter un temps de rétention,
- être efficace pour différentes qualités d'eau, et
- limiter l'utilisation de réactifs consommables à la différence d'un traitement chimique par injection de chlore par exemple.

L'eau de ballast pompée ou réceptionnée passe donc à travers un filtre pour une première élimination de particules non désirables. Ce filtre effectue un nettoyage à contre flux de façon automatisée afin d'assurer une certaine efficacité lors de l'opération. Le fluide passe ensuite à travers un réseau de lampes UV afin de stériliser les bactéries. Un système de nettoyage régulier des lampes UV est avantageux afin d'en optimiser le rendement.

Sur la figure 3A, la barge 20 est montrée en approche le long de la paroi 21 de la coque d'un navire assisté 23 avec la grue 16 démâtée. Sur la figure 3B, la barge est à couple, en début de matage de la grue 16 avec un mât 18 déployé et le dispositif de transfert et connexion 3 en début de levage. Sur la figure 3C, la grue est matée et la pièce de connexion 2 plaquée contre la coque du navire assisté pour effectuer le transfert de fluide. Dès lors que le transfert de fluide est terminé, l'opérateur peut remettre en tension les élingues 4 grâce aux moyens de levage 16 avant de couper l'alimentation de la bobine excitatrice 5.

## Revendications

1. Dispositif de transfert de fluide et de connexion (3) comprenant une conduite de transfert de fluide (1) flexible, et au moins une pièce de connexion électromagnétique (2), de préférence de forme torique, définissant un orifice axial dénommé « orifice de connexion » (2c), fixée respectivement à au moins une des extrémités longitudinales de la dite conduite de transfert, la dite pièce de connexion étant apte à s'appliquer de manière étanche (8) contre une paroi métallique plane (21) autour d'un orifice (22) de la dite paroi métallique dénommé « orifice de transfert » pour permettre le transfert d'un fluide à travers ledit orifice de connexion (2c), le dit orifice de transfert (22) et la dite conduite de transfert (1), la dite pièce de connexion (2) renfermant une bobine d'excitation électromagnétique (5) formant un électroaimant apte à plaquer une face avant plate (2a), de préférence annulaire, de la dite pièce de connexion contre ladite paroi métallique lorsque la dite bobine est alimentée en courant électrique par un câble d'alimentation (17), la dite pièce de connexion (2) comprenant au moins un premier support de levage comprenant deux premier et deuxième élements d'accroché (9a ,9b), apte à coopérer avec des moyens de levage et manutention (15, 16) pour permettre le levage et le déplacement de la dite pièce de connexion, et au moins un deuxième support de levage (10) étant apte à coopérer avec la dite conduite de transfert et les dits moyens de levage et manutention (15, 16) pour permettre le levage et le déplacement de la conduite de transfert par les mêmes dits moyens de levage et manutention (15, 16), le dit deuxième support de levage (10) présentant une forme de collier ou manchon tubulaire apte à être positionné autour et le long de la dite conduite de transfert à une distance déterminée (d) de ladite pièce de connexion, au moins 3 élingues de levage (4, 4a, 4b, 4c) en patte d'oie suspendues à un même crochet de levage (15a) étant fixées respectivement à trois éléments d'accroché, dont deux dits premier et deuxième éléments d'accroché (9a, 9b) solidaires de la dite pièce de connexion disposés symétriquement sur la face supérieure de la dite pièce de connexion et un troisième élément d'accroché (10a) solidaire dudit collier ou manchon tubulaire disposé sur la face supérieure dudit collier ou manchon tubulaire.

2. Dispositif de transfert de fluide et de connexion selon la revendication 1, **caractérisé en ce que** ledit collier ou manchon tubulaire est apte à être positionné de manière fixe et amovible autour et le long de la dite conduite de transfert à une distance déterminée (d) de ladite pièce de connexion adaptable à volonté.

3. Dispositif de transfert de fluide et de connexion selon l'une quelconque des revendications 1 ou 2, **caractérisé en ce que** ledit collier ou manchon tubulaire est apte à coulisser par l'intermédiaire de roulements à billes, roulettes et/ou patins.

4. Dispositif de transfert de fluide et de connexion selon l'une quelconque des revendications 1 à 3, **caractérisé en ce que** ledit collier ou manchon tubulaire est apte à être positionné à une distance déterminée (d) de ladite pièce de connexion, permettant de maintenir la conduite de transfert en position coaxiale au dit orifice de connexion (2c) au moins dans la partie de conduite entre le dit deuxième support de levage (10) et la pièce de connexion (2) à l'aide d'une grue à bras articulé (16).

5. Dispositif de transfert de fluide et de connexion selon l'une quelconque des revendications 1 à 4, **caractérisé en ce que** ledit deuxième support de levage (10) comprend un système de collier articulé comprenant deux demi-coquilles de part et d'autre de la conduite flexible fixées entre elles permettant de solidariser le deuxième support de levage à la conduite de manière variable et amovible.

6. Dispositif de transfert de fluide et de connexion selon l'une quelconque des revendications 1 à 5, **caractérisé en ce que** la dite pièce de connexion comprend une pièce torique massive en matériau amagnétique (6) à section axiale rectangulaire (6a) renfermant une cavité torique au sein de laquelle la dite bobine (5) est enroulée en spires coaxiales sur plusieurs couches superposées longitudinalement et radialement, la dite bobine (5) étant noyée dans une résine époxy diélectrique à haute conductivité thermique apte à éviter une surchauffe du bobinage.

7. Dispositif de transfert de fluide et de connexion selon l'une quelconque des revendications 1 à 6, **caractérisé en ce que** la dite pièce de connexion (2) est fixée indirectement à l'extrémité de la dite conduite de transfert par l'intermédiaire d'une première bride de fixation mécanique (11), la dite première bride de fixation mécanique (11) étant fixée directement et de manière réversible à la dite extrémité de la dite conduite de transfert, et la dite pièce de connexion (2) comprend sur une face arrière (2b) une échancrure à fond annulaire plat axial (2d) dans la dite pièce massive en matériau ferromagnétique (6) comprenant des perçages taraudés (13) fixés par des vis (12) à la dite première bride de connexion mécanique (11).

8. Dispositif de transfert de fluide et de connexion selon l'une quelconque des revendications 1 à 7, **caractérisé en ce que** la dite pièce de connexion électromagnétique (2) comprend sur sa face avant (2a) au moins un joint torique (8) souple et compressible disposé coaxialement autour dudit orifice de connexion (2c) de la pièce de connexion.

9. Dispositif de transfert de fluide et de connexion selon l'une quelconque des revendications 1 à 8, **caractérisé en ce que** la dite conduite de transfert comprend à son autre extrémité une deuxième bride de connexion mécanique (14).

10. Dispositif de transfert de fluide et de connexion selon l'une quelconque des revendications 1 à 9, **caractérisé en ce qu'**il comprend des moyens de levage comprenant une grue en forme de bras articulé (16).

11. Dispositif de transfert de fluide et de connexion selon la revendication 10, **caractérisé en ce que** le bras articulé (16) permet de déplacer un crochet de levage (15a) qui y est suspendu (15) et auquel crochet de levage sont suspendus plusieurs élingues de levage (4) reliées respectivement à la dite conduite de transfert (1) et à la dite pièce de connexion (2).

12. Barge d'assistance (20) pour le transfert de fluide depuis un dit orifice de transfert (22) d'une dite paroi métallique (21) du bordé d'un navire assisté (23) comprenant un dispositif de transfert de fluide et de connexion (3) selon l'une quelconque des revendications 1 à 11, et des moyens de levage comprenant une grue en forme de bras articulé (16) montés sur le pont de la dite barge d'assistance, ledit bras articulé supportant le dit dispositif de transfert de fluide et de connexion (3).

13. Barge d'assistance (20) selon la revendication 12, **caractérisée en ce que** la dite conduite de transfert comprend à son autre extrémité une deuxième bride de connexion mécanique (14) fixée à une unité de traitement de fluide, de préférence une unité de traitement d'eaux de ballast (19) disposée à bord de la dite barge d'assistance.

14. Procédé de transfert de fluide à l'aide du dispositif de transfert de fluide et de connexion (3) selon l'une quelconque des revendications 1 à 11 ou une barge d'assistance selon l'une des revendications 12 ou 13, dans lequel on réalise les étapes suivantes :
a) on déplace à l'aide de moyens de levage et manutention (15, 16) la dite pièce de connexion électromagnétique (2) et la dite conduite de transfert de manière à appliquer la dite face avant (2a) de la dite pièce de connexion électromagnétique (2) contre une paroi métallique plane (21) autour dudit orifice de connexion (22) de la dite paroi métallique, et
b) on alimente en courant électrique la dite bobine électromagnétique pour plaquer de manière étanche (8) la dite pièce de connexion contre une paroi métallique plane (21) autour dudit orifice de transfert (22) de la dite paroi métallique, et
c) on effectue le transfert d'un fluide à travers ledit orifice de transfert (22), ledit orifice de connexion (2c) et la dite conduite de transfert (1), puis
d) une fois, le transfert de fluide terminé, on interrompt l'alimentation en courant électrique de la dite bobine (5) et on dégage, à l'aide des dits moyens de levage et manutention (15, 16), la dite pièce de connexion électromagnétique (2) et la dite conduite de transfert par rapport à la dite paroi métallique plane (22).

15. Procédé de transfert de fluide selon la revendication 14, **caractérisé en ce qu'**on réalise le transfert d'eaux de ballast depuis un orifice de transfert (22) d'une paroi métallique (21) du bordé d'un navire assisté (23) vers une barge d'assistance (20) comprenant des dits moyens de levage comprenant une grue en forme de bras articulé (16) montés sur le pont de la dite barge d'assistance, le dit bras articulé supportant le dit dispositif de transfert de fluide et de connexion (3), et avant, après ou de préférence pendant le transfert des eaux de ballasts, on réalise le traitement des eaux de ballast à l'aide d'une unité de traitement d'eaux de ballast (19) à bord de la dite barge d'assistance, la dite conduite de transfert comprenant à son autre extrémité une deuxième bride de connexion mécanique (14) fixée à un orifice d'entrée de ladite unité de traitement d'eaux de ballast (19) à bord de la dite barge d'assistance.

## Patentansprüche

1. Fluidübertragungs- und Verbindungsvorrichtung (3), die eine biegsame Fluidübertragungsleitung (1) und mindestens ein elektromagnetisches Verbindungsstück (2), vorzugsweise mit torischer Form, umfasst, das eine "Verbindungsöffnung" (2c) genannte axiale Öffnung definiert und an mindestens jeweils einem der Längsenden der Übertragungsleitung befestigt ist, wobei das Verbindungsstück geeignet ist, auf dichte Weise (8) gegen eine ebene metallische Wand (21) um eine "Übertragungsöffnung" genannte Öffnung (22) der metallischen Wand herum angesetzt zu werden, um die Übertragung eines Fluids durch die Verbindungsöffnung (2c), die Übertragungsöffnung (22) und die Übertragungsleitung (1) zu ermöglichen, wobei das Verbindungsstück (2) eine elektromagnetische Erregerspule (5) einschließt, die einen Elektromagneten bildet, der geeignet ist, eine vorzugsweise ringförmige, flache vordere Seite (2a) des Verbindungsstücks gegen die metallische Wand zu drücken, wenn die Spule von einem Versorgungskabel (17) mit elektrischem Strom versorgt wird, wobei das Verbindungsstück (2) mindestens eine erste Hebestütze, die zwei erste und zweite Hängeelemente (9a, 9b) umfasst, die geeignet sind, mit Hebe- und Handhabungsmitteln (15, 16) zusammenzuwirken, um das Heben und die Verlagerung des Verbindungsstücks zu ermöglichen, und mindestens eine zweite Hebestütze (10) umfasst, die geeignet ist, mit der Übertragungsleitung und den Hebe- und Handhabungsmitteln (15, 16) zusammenzuwirken, um das Heben und die Verlagerung der Übertragungsleitung durch dieselben Hebe- und Handhabungsmittel (15, 16) zu ermöglichen, wobei die zweite Hebestütze (10) eine Form einer rohrförmigen Schelle oder Muffe aufweist, die geeignet ist, in einem bestimmten Abstand (d) von dem Verbindungsstück um die und entlang der Übertragungsleitung positioniert zu sein, und wobei mindestens 3 Hebeschlingen (4, 4a, 4b, 4c) im Dreiecksverband, die an einem selben Hebehaken (15a) aufgehängt sind, jeweils an drei Hängeelementen befestigt sind, von denen das erste und das zweite Hängeelement (9a, 9b), die fest mit dem Verbindungsstück verbunden sind, symmetrisch auf der oberen Seite des Verbindungsstücks angeordnet sind, und ein drittes Hängeelement (10a), das fest mit der rohrförmigen Schelle oder Muffe verbunden ist, auf der oberen Seite der rohrförmigen Schelle oder Muffe angeordnet ist.

2. Fluidübertragungs- und Verbindungsvorrichtung nach Anspruch 1, **dadurch gekennzeichnet, dass** die rohrförmige Schelle oder Muffe geeignet ist, in einem bestimmten, nach Belieben anpassbaren Abstand (d) von dem Verbindungsstück auf feste und abnehmbare Weise um und entlang der Übertragungsleitung positioniert zu sein.

3. Fluidübertragungs- und Verbindungsvorrichtung nach einem der Ansprüche 1 oder 2, **dadurch gekennzeichnet, dass** die rohrförmige Schelle oder Muffe geeignet ist, über Kugellager, Rollen und/oder Kufen zu gleiten.

4. Fluidübertragungs- und Verbindungsvorrichtung nach einem der Ansprüche 1 bis 3, **dadurch gekennzeichnet, dass** die rohrförmige Schelle oder Muffe geeignet ist, in einem bestimmten Abstand (d) von dem Verbindungsstück positioniert zu sein, wodurch es ermöglicht wird, die Übertragungsleitung zumindest in dem Leitungsteil zwischen der zweiten Hebestütze (10) und dem Verbindungsstück (2) mittels eines Krans (16) mit Gelenkarm in einer zu der Verbindungsöffnung (2c) koaxialen Position zu halten.

5. Fluidübertragungs- und Verbindungsvorrichtung nach einem der Ansprüche 1 bis 4, **dadurch gekennzeichnet, dass** die zweite Hebestütze (10) ein Gelenkschellensystem umfasst, das zwei Halbschalen auf beiden Seiten der biegsamen Leitung umfasst, die untereinander befestigt sind und das feste Verbinden der zweiten Hebestütze mit der Leitung auf variable und abnehmbare Weise ermöglichen.

6. Fluidübertragungs- und Verbindungsvorrichtung nach einem der Ansprüche 1 bis 5, **dadurch gekennzeichnet, dass** das Verbindungsstück ein massives torisches Stück aus nicht magnetischem Material (6) mit einem rechtwinkligen axialen Querschnitt (6a) umfasst, das einen torischen Hohlraum einschließt, in dem die Spule (5) in koaxialen Windungen auf mehreren in Längsrichtung und radial übereinanderliegenden Schichten gewickelt ist, wobei die Spule (5) in einem dielektrischen Expoxidharz mit einer hohen Wärmeleitfähigkeit versenkt ist, das geeignet ist, eine Überhitzung der Wicklung zu vermeiden.

7. Fluidübertragungs- und Verbindungsvorrichtung nach einem der Ansprüche 1 bis 6, **dadurch gekennzeichnet, dass** das Verbindungsstück (2) indirekt über einen ersten mechanischen Befestigungsflansch (11) an dem Ende der Übertragungsleitung befestigt ist, wobei der erste mechanische Befestigungsflansch (11) direkt und auf umkehrbare Weise an dem Ende der Übertragungsleitung befestigt ist, und das Verbindungsstück (2) auf einer hinteren Seite (2b) eine Aussparung mit einem axialen, flachen, ringförmigen Boden (2d) in dem massiven Stück aus ferromagnetischem Material (6) umfasst, die Gewindebohrungen (13) umfasst, die durch Schrauben (12) an dem ersten mechanischen Verbindungsflansch (11) befestigt sind.

8. Fluidübertragungs- und Verbindungsvorrichtung nach einem der Ansprüche 1 bis 7, **dadurch gekennzeichnet, dass** das elektromagnetische Verbindungsstück (2) auf seiner vorderen Seite (2a) mindestens einen nachgiebigen und zusammendrückbaren Dichtungsring (8) umfasst, der koaxial um die Verbindungsöffnung (2c) des Verbindungsstücks herum angeordnet ist.

9. Fluidübertragungs- und Verbindungsvorrichtung nach einem der Ansprüche 1 bis 8, **dadurch gekennzeichnet, dass** die Übertragungsleitung an ihrem anderen Ende einen zweiten mechanischen Verbindungsflansch (14) umfasst.

10. Fluidübertragungs- und Verbindungsvorrichtung nach einem der Ansprüche 1 bis 9, **dadurch gekennzeichnet, dass** sie Hebelmittel umfasst, die einen Kran in Gelenkarmform (16) umfassen.

11. Fluidübertragungs- und Verbindungsvorrichtung nach Anspruch 10, **dadurch gekennzeichnet, dass** der Gelenkarm (16) es ermöglicht, einen Hebehaken (15a), der daran aufgehängt ist (15), zu verlagern, und an dem Hebehaken mehrere Hebeschlingen (4) aufgehängt sind, die mit der Übertragungsleitung (1) beziehungsweise dem Verbindungsstück (2) verbunden sind.

12. Unterstützungsboot (20) für die Übertragung von Fluid von einer Übertragungsöffnung (22) einer metallischen Wand (21) ausgehend von der Bordwand eines unterstützten Wasserfahrzeugs (23), das eine Fluidübertragungs- und Verbindungsvorrichtung (3) nach einem der Ansprüche 1 bis 11 und Hebemittel umfasst, die einen Kran in Gelenkarmform (16) umfassen und auf der Brücke des Unterstützungsbootes montiert sind, wobei der Gelenkarm die Fluidübertragungs- und Verbindungsvorrichtung (3) stützt.

13. Unterstützungsboot (20) nach Anspruch 12, **dadurch gekennzeichnet, dass** die Übertragungsleitung an ihrem anderen Ende einen zweiten mechanischen Verbindungsflansch (14) umfasst, der an einer Fluidbehandlungseinheit befestigt ist, vorzugsweise einer Ballastwasser-Behandlungseinheit (19), die an Bord des Unterstützungsbootes angeordnet ist.

14. Verfahren zur Übertragung von Fluid mittels der Fluidübertragungs- und Verbindungsvorrichtung (3) nach einem der Ansprüche 1 bis 11 oder eines Unterstützungsboots nach einem der Ansprüche 12 oder 13, in dem die folgenden Schritte ausgeführt werden:
a) mittels der Hebe- und Handhabungsmittel (15, 16), Verlagern des elektromagnetischen Verbindungsstücks (2) und der Übertragungsleitung, derart dass die vordere Seite (2a) des elektromagnetischen Verbindungsstücks (2) gegen eine ebene metallische Wand (21) um die Verbindungsöffnung (22) der metallischen Wand herum angesetzt wird, und
b) Versorgen der elektromagnetischen Spule mit elektrischem Strom, um das Verbindungsstück auf dichte Weise (8) gegen eine ebene metallische Wand (21) um die Übertragungsöffnung (22) der metallischen Wand herum zu drücken, und
c) Durchführen der Übertragung eines Fluids durch die Übertragungsöffnung (22), die Verbindungsöffnung (2c) und die Übertragungsleitung (1), dann
d) nachdem die Fluidübertragung beendet wurde, Unterbrechen der Versorgung der Spule (5) mit elektrischem Strom und Entfernen des elektromagnetischen Verbindungsstücks (2) und der Übertragungsleitung in Bezug auf die ebene metallische Wand (22) mittels der Hebe- und Handhabungsmittel (15, 16).

15. Verfahren zur Übertragung von Fluid nach Anspruch 14, **dadurch gekennzeichnet, dass** die Übertragung von Ballastwasser ausgehend von einer Übertragungsöffnung (22) einer metallischen Wand (21) der Bordwand eines unterstützten Wasserfahrzeugs (23) hin zu einem Unterstützungsboot (20) ausgeführt wird, das Hebemittel umfasst, die einen Kran in Gelenkarmform (16) umfassen und auf der Brücke des Unterstützungsbootes montiert sind, wobei der Gelenkarm die Fluidübertragungs- und Verbindungsvorrichtung (3) stützt, und vor, nach und vorzugsweise während der Übertragung des Ballastwassers die Behandlung des Ballastwassers mittels einer Ballastwasser-Behandlungseinheit (19) an Bord des Unterstützungsbootes ausgeführt wird, wobei die Übertragungsleitung an ihrem anderen Ende einen zweiten mechanischen Verbindungsflansch (14) umfasst, der an einer Eingangsöffnung der Ballastwasser-Behandlungseinheit (19) an Bord des Unterstützungsbootes befestigt ist.

## Claims

1. A fluid transfer and connection device (3) comprising a flexible fluid transfer pipe (1), and at least one electromagnetic connection component (2), preferably of toroidal shape, defining an axial opening called "connection opening" (2c), attached respectively to at least one of the longitudinal ends of said transfer pipe, said connection component being capable of being applied in a sealed manner (8) against a flat metal wall (21) around an opening (22) of said metal wall called "transfer opening" to allow the transfer of a fluid through said connection opening (2c), said transfer opening (22) and said transfer pipe (1), said connection component (2) enclosing an electromagnetic excitation coil (5) forming an electromagnet capable of pressing a flat front face (2a), preferably annular, of said connection component against said metal wall when said coil is supplied with electrical current by a power supply cable (17), said connection component (2) comprising at least one first lifting support comprising two first and second coupling elements (9a, 9b) capable of cooperating with lifting and handling means (15, 16) to allow lifting and moving the connection component, and at least one second lifting support (10) being capable of cooperating with said transfer pipe and said lifting and handling means (15, 16) to allow lifting and moving the transfer pipe by the same said lifting and handling means (15, 16), said second lifting support (10) having the form of a collar or tubular sleeve capable of being positioned around and along said transfer pipe at a predetermined distance (d) from said connection component, at least 3 crow's foot lifting slings (4, 4a, 4b) suspended from a same lifting hook (15a) being respectively attached to three coupling elements, whose two said first and second coupling elements (9a, 9b) integral with said connection component disposed symmetrically on the upper face of said connection component and a third coupling element (10a) integral with said collar or tubular sleeve disposed on the upper face of said collar or tubular sleeve.

2. The fluid transfer and connection device according to claim 1, **characterized in that** said collar or tubular sleeve is capable of being positioned fixedly and removably around and along said transfer pipe at a predetermined distance (d), adapatable at will from said connection component.

3. The fluid transfer and connection device according to any one of claims 1 or 2, **characterized in that** said collar or tubular sleeve is capable of sliding by means of ball bearings, rollers and/or sliders.

4. The fluid transfer and connection device according to any one of claims 1 to 3, **characterized in that** said collar or tubular sleeve is capable of being positioned at a predetermined distance (d) from said connection component, allowing the transfer pipe to be retained in a coaxial position with said connection opening (2c) at least in the portion of the pipe between said second lifting support (10) and the connection component (2) by means of a crane with an articularted arm (16).

5. The fluid transfer and connection device according to any one of claims 1 to 4, **characterized in that** said second lifting support (10) comprises an articulated collar system comprising two half-shells on either side of the flexible pipe attached together allowing the second lifting support to be integrated with the pipe in a variable and removable manner.

6. The fluid transfer and connection device according to any one of claims 1 to 5, **characterized in that** said connection component comprises a massive toroidal component made of non-magnetic material (6) with a rectangular axial section (6a) enclosing a toroidal cavity within which said coil (5) is wound in coaxial turns over several layers longitudinally and radially stacked, said coil (5) being embedded in a dielectric epoxy resin with high thermal conductivity capable of avoiding overheating the windings.

7. The fluid transfer and connection device according to any one of claims 1 to 6, **characterized in that** said connection component (2) is indirectly attached to the end of said transfer pipe by means of a first mechanical attachment flange (11), said first mechanical attachment flange (11) being directly and reversibly attached to said end of said transfer pipe, and said connection component (2) comprises on a rear face (2b) a notch with an axial flat annular bottom (2d) in said massive component made of ferromagnetic material (6) comprising threaded bores (13) attached by screws (12) to said first mechanical connection flange (11).

8. The fluid transfer and connection device according to any one of claims 1 to 7, **characterized in that** said electromagnetic connection component (2) comprises on its front face (2a) at least one flexible and compressible O-ring (8) coaxially disposed around said connection opening (2c) of the connection component.

9. The fluid transfer and connection device according to any one of claims 1 to 8, **characterized in that** said transfer pipe comprises at its other end a second mechanical connection flange (14).

10. The fluid transfer and connection device according to any one of claims 1 to 9, **characterized in that** it comprises lifting means comprising a crane in the form of an articulated arm (16).

11. The fluid transfer and connection device according to claim 10, **characterized in that** the articulated arm (16) allows the movement of a lifting hook (15a) which is suspended from it (15) and to which lifting hook are suspended several lifting slings (4) connected to said transfer pipe (1) and to said connection component (2) respectively.

12. An assistance barge (20) for the fluid transfer from a said transfer opening (22) of a said metal wall (21) of the plating of an assisted vessel (23) comprising a fluid transfer and connection device (3) according to any one of claims 1 to 11, and lifting means comprising a crane in the form of an articulated arm (16) mounted on the deck of said assistance barge, said articulated arm supporting said fluid transfer and connection device (3).

13. The assistance barge (20) according to claim 12, **characterized in that** said transfer pipe comprises at its other end a second mechanical connection flange (14) attached to a fluid treatment unit, preferably a ballast water treatment unit (19) disposed aboard said assistance barge.

14. A method of fluid transfer by means of the fluid transfer and connection device (3) according to any one of claims 1 to 11 or an assistance barge according to one of claims 12 or 13, wherein the following steps are carried out:
a) moving by means of lifting and handling means (15, 16) said electromagnetic connection component (2) and said transfer pipe so as to apply said front face (2a) of said electromagnetic connection component (2) against a flat metal wall (21) around said connection opening (22) of said metal wall, and
b) supplying said electromagnetic coil with electrical current to press said connection component in a sealed manner (8) against a flat metal wall (21) around said transfer opening (22) of said metal wall, and
c) carrying out the transfer of a fluid through said transfer opening (22), said connection opening (2c) and said transfer pipe (1), then
d) once the fluid transfer is completed, interrupting the supply of electrical current of said coil (5) and disengaging said electromagnetic connection component (2) and said transfer pipe, by means of said lifting and handling means (15, 16), with respect to said flat metal wall (22).

15. The fluid transfer method according to claim 14, **characterized in that** the transfer of ballast water is carried out from a transfer opening (22) of a metal wall (21) of the plating of an assisted vessel (23) to an assistance barge (20) comprising said lifting means comprising a crane in the form of an articulated arm (16) mounted on the deck of said assistance barge, said articulated arm supporting said fluid transfer and connection device (3), and before, after or preferably during the transfer of the ballast water, carrying out the treatment of the ballast water by means of a ballast water treatment unit (19) aboard said assistance barge, said transfer pipe comprising at its other end a second mechanical connection flange (14) attached to an inlet opening of said ballast water treatment unit (19) aboard said assistance barge.
